(19) Europäisches Patentamt
European Patent Office
Office européen des brevets

(11) **EP 3 230 195 B1**

(12) **EUROPÄISCHE PATENTSCHRIFT**

(45) Veröffentlichungstag und Bekanntmachung des Hinweises auf die Patenterteilung:
**06.09.2023   Patentblatt 2023/36**

(21) Anmeldenummer: **15770901.5**

(22) Anmeldetag: **29.09.2015**

(51) Internationale Patentklassifikation (IPC):
**B66C 23/18** *(2006.01)*      **B66C 23/26** *(2006.01)*
**B66C 23/72** *(2006.01)*

(52) Gemeinsame Patentklassifikation (CPC):
**B66C 23/185; B66C 23/26; B66C 23/72**

(86) Internationale Anmeldenummer:
**PCT/EP2015/072311**

(87) Internationale Veröffentlichungsnummer:
**WO 2016/091413 (16.06.2016 Gazette 2016/24)**

(54) **TURMDREHKRAN ZUM ERRICHTEN EINER WINDENERGIEANLAGE, SOWIE VERFAHREN ZUM ERRICHTEN DES TURMDREHKRANS**

TOWER CRANE FOR ERECTING A WIND TURBINE, AND METHOD FOR ERECTING SAID TOWER CRANE

GRUE À TOUR DESTINÉE À CONSTRUIRE UNE ÉOLIENNE, AINSI QUE PROCÉDÉ DE CONSTRUCTION DE LA GRUE À TOUR

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **09.12.2014   DE 102014225336**

(43) Veröffentlichungstag der Anmeldung:
**18.10.2017   Patentblatt 2017/42**

(73) Patentinhaber: **Wobben Properties GmbH**
**26607 Aurich (DE)**

(72) Erfinder:
 • **KERSTEN, Roy**
   **39291 Hohenwarthe (DE)**
 • **KNOOP, Frank**
   **26607 Aurich (DE)**
 • **JANSSEN, Ludger**
   **26605 Aurich (DE)**
 • **JANSSEN, Tim**
   **26605 Aurich (DE)**
 • **CONERS, Rolf**
   **26676 Elisabethfehn (DE)**

(74) Vertreter: **Eisenführ Speiser**
**Patentanwälte Rechtsanwälte PartGmbB**
**Postfach 10 60 78**
**28060 Bremen (DE)**

(56) Entgegenhaltungen:
| | |
|---|---|
| **EP-A2- 0 384 112** | **CH-A5- 657 889** |
| **CN-B- 102 642 782** | **CN-B- 102 642 782** |
| **CN-U- 202 671 068** | **DE-A1- 3 926 920** |
| **DE-A1-102005 025 646** | **GB-A- 1 048 722** |
| **GB-A- 1 340 391** | **US-A- 3 361 268** |
| **US-A- 5 580 095** | |

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

## Beschreibung

Die vorliegende Erfindung betrifft einen Turmdrehkran zum Errichten einer Windenergieanlage, mit einem Turm, und einem mit dem Turm verbundenen Turmunterbau zum Stützen des Turms, wobei der Turmunterbau ein Abstützkreuz aufweist, welches drei oder mehr, vorzugsweise vier sich vom Turm forterstreckende Beine aufweist.

Turmdrehkrane der vorgenannten Art werden üblicherweise zum Errichten von hohen Bauwerken wie insbesondere Türmen von Windenergieanlagen eingesetzt, weil sie sehr hohe Lasten in sehr großen Höhen befördern können. Entscheidend für den Betrieb solcher Turmdrehkrane ist die Fähigkeit der Kransysteme, sie zu dem Installationsort der Windenergieanlage hin verbringen zu können, und sie dort in möglichst kurzer Zeit auf- und abbauen zu können. Dies ist insbesondere vor dem Hintergrund wichtig, dass Windenergieanlagen häufig in entlegenen Regionen mit wenn überhaupt nur gering ausgeprägter Infrastruktur errichtet werden. Insbesondere in Waldgebieten oder an Steigungen stehen zudem oft nur eingeschränkte Bodenflächen zum Installieren der Windenergieanlagen zur Verfügung, so dass es dort auch darauf ankommt, die Turmdrehkrane - und die Windenergieanlagen - mit geringem Platzbedarf errichten zu können. Weiterhin ist es von Bedeutung, die Turmdrehkrane mit Blick auf diese Platzbedürfnisse möglichst nah an den zu errichtenden Windenergieanlagenturm heransetzen zu können.

## Geänderte Beschreibungsseiten (Reinschrift)

Aus dem Stand der Technik sind Turmdrehkrane bekannt, bei denen der Turmunterbau mittels Fundamentankern fest mit dem Windenergieanlagefundament verbunden wird. Zumindest Teile dieser Befestigung verbleiben nach dem Fertigstellen der Windenergieanlage im Fundament, weil sie dort eingegossen sind. Hier werden wertvolle Ressourcen verschwendet. Ferner wird der Zeitbedarf, der für eine solche Verankerung erforderlich ist, als nachteilig empfunden, weil er die benötigte Zeit für das Errichten der Windenergieanlage insgesamt erhöht.

CN 202671068 U betrifft einen Turmunterbau für einen Drehkran. Der Turmunterbau hat zwei im Abstand zueinander angeordnete kreisförmige Plattenkörper. Die Plattenkörper werden übervertikale Pfosten zueinandergehalten. Der untere Plattenkörper steht auf dem Untergrund auf. Der Turmunterbau weist vier Auslegearme auf, an deren Enden Abstützplatten aus Stahlbeton angeordnet sind. Die Abstützplatten sind über Streben mit dem unteren Plattenkörper und auch untereinander verbunden. Zudem wird in die Öffnung des unteren Plattenkörpers Beton eingegossen . CN 202671068U offenbart den Oberbegriff des Anspruchs 1.

Der vorliegenden Erfindung lag somit die Aufgabe zugrunde, einen Turmdrehkran anzugeben, der die im Stand der Technik aufgefundenen Nachteile möglichst weitgehend behebt. Insbesondere lag der Erfindung die Aufgabe zugrunde, einen Turmdrehkran anzugeben, der ein kostentechnisch sowie vorzugsweise zeitlich günstigeres Errichten einer Windenergieanlage ermöglicht.

Die Erfindung löst die ihr zugrundeliegende Aufgabe bei dem eingangs bezeichneten Turmdrehkran gemäß einem ersten Aspekt dadurch, dass an jedem Bein bodenseitig eine mit dem Fundament unverbundene Lastverteilerplatte befestigt ist, wobei die Lastverteilerplatten gemeinsam den Ballast des Turms bilden. Die Erfindung macht sich die Erkenntnis zunutze, dass bei einer ausreichenden Dimensionierung der Lastverteilerplatten sowohl hinsichtlich ihrer Aufstandsfläche, als auch hinsichtlich ihres Gewichts ein Verankern des Turmdrehkrans am Fundament nicht erforderlich ist, um dessen Standsicherheit zu gewährleisten. Dies wird insbesondere dadurch erreicht, dass die Lastverteilerplatten schwer genug sind, um den sonst bei vorbekannten Turmdrehkranen üblichen Zentralballast zu ersetzen, welcher sonst in der Nähe des Turms angeordnet werden musste. Die Berechnung der notwendigen Größe und des Gewichts der Lastverteilerplatten kann auf allgemein bekannte Weise mit Blick auf die vorbenannten Lastfälle des Turmdrehkrans und standortunabhängigen Einflussfaktoren vorgenommen werden.

In einer bevorzugten Weiterbildung der Erfindung weist der Turmunterbau eine Nivelliereinrichtung auf, wobei die Nivelliereinrichtung vier separat ansteuerbare Zylinder aufweist. Vorzugsweise weist die Nivelliereinrichtung Sensoren zum Erfassen der auf die Zylinder wirkenden Kraft in Hubrichtung, und/oder Drucksensoren zum Erfassen des auf die Zylinder wirkenden Fluiddrucks auf, und/oder einen Neigungssensor, und/oder einen oder mehrere (vorzugsweise für jeden Zylinder mindestens einen) Sensoren zur Erfassung des Zylinderhubs.

Vorzugsweise sind die Zylinder als fluidbetätigte Zylinder, insbesondere als pneumatische oder hydraulische Zylinder ausgebildet. Zur Kraftmessung werden in jener Ausführungsform vorzugsweise Drucksensoren verwendet. Über den auf die Zylinder wirkenden Fluiddruck ist es möglich, unmittelbar über die Zylinderfläche auf die Kräfte zu schließen, die auf jeden Zylinder wirken. Der Turm ist dann nivelliert, und von allen vier Beinen gleichmäßig gestützt, wenn die auf die Zylinder wirkenden Kräfte in allen Fällen gleich sind. Als zusätzliche Informationsquelle dient vorzugsweise ein Neigungssensor, der vorzugsweise als zweiachsiger Neigungssensor ausgebildet ist. Abgleich der Information dieser beiden Messsysteme kann beispielsweise zum Erkennen von Störfällen und Generieren von entsprechenden Störsignalen genutzt werden.

Weiter vorzugsweise weist der Turmdrehkran einen oder mehrere Absolutmesssysteme zum Erfassen des tatsächlich von den Zylindern zurückgelegten Zylinderhubs auf, beispielsweise Wegmessaufnehmer. Mit Hilfe dieser Information ist es für einen Bediener leichter zu entscheiden, ob bei einer festgestellten Kraftungleichheit in den Zylindern ein Zylinder noch weiter ausgefahren werden muss, oder gegebenenfalls eingefahren werden muss, um sich an die übrigen Zylinder anzugleichen. In einer bevorzugten Ausführungsform weist die Nivelliereinrichtung eine elektronische Steuereinrichtung zum Ansteuern der Zylinder auf, vorzugsweise eine SPS-Steuerung. Die elektronische Steuereinrichtung ist vorzugsweise dazu eingerichtet, in Abhängigkeit von zumindest einer der folgenden Größen, einen, mehrere oder sämtliche der Zylinder so anzusteuern, dass der Turm senkrecht ausgerichtet wird: Neigungswinkel des Turms, auf die Zylinder wirkender Fluiddruck, und von den Zylindern zurückgelegter Zylinderhub. Hierzu ist die Steuereinrichtung vorzugsweise signalleitend mit den entsprechenden Sensoren verbunden sowie zur Aufnahme, Verarbeitung und Ausgabe entsprechender Signale und Verarbeitungsergebnisse programmiert.

In Abhängigkeit von zulassungsrechtlichen Bestimmungen kann es erforderlich sein, die Steuereinrichtung nicht vollständig autonom die Ausrichtung des Turms erledigen zu lassen, sondern einem Bediener die schlussendliche Entscheidungsgewalt und Kontrolle über den Ausrichtvorgang zu überlassen. In diesem Fall wird eine Ausführungsform bevorzugt, in der die elektronische Steuereinrichtung dazu eingerichtet ist, in Abhängigkeit von zumindest einer der folgenden Größen eine Empfehlung für die Ansteuerung eines oder mehrere Zylinder zu ermitteln, und ein von dem Bediener auslesbares, für die Empfehlung repräsentatives Signal zu erzeugen: Neigungswinkel des Turms, auf die Zylinder wirkender Fluiddruck, von den Zylindern zurückgelegter Zylinderhub.

Das repräsentative Signal kann beispielsweise darin bestehen, dass ein Zylinder angezeigt wird, und für diesen Zylinder ein entsprechendes Signal angezeigt wird, nach dem dieser weiter auszufahren oder einzufahren ist. Eine einfache, auch in einem Baustellenumfeld gut ablesbare Möglichkeit wären beispielsweise farbkodierte Leuchtmittel, etwa rote und grüne Lampen (Leuchtdioden oder dergleichen), die jedem Zylinder zugeordnet sind.

In einer vorteilhaften Ausgestaltung ist die elektronische Steuereinrichtung dazu programmiert, dem Bediener die Kontrolle über einen Master-Zylinder einzuräumen, den dieser auf die Lastverteilerplatte absenkt, und sodann die übrigen Zylinder, welche gewissermaßen im Slave-Betrieb arbeiten, in Abhängigkeit von den Steuerbefehlen des Bedieners selbsttätig nachzuregeln.

Die Nivelliereinrichtung weist vorzugsweise ein Anzeigegerät auf, welches dazu eingerichtet ist, eine, mehrere oder sämtliche der folgenden Größen anzuzeigen: Winkellage des Turms, Belastung der Zylinder, Betriebsart der Nivelliereinrichtung, Störmeldungen, Systemdrücke, Position der Zylinder am Abstützkreuz, die zur Ansteuerung empfohlenen Zylinder, und die Steuerempfehlung.

In einer weiteren bevorzugten Ausführungsform sind benachbarte Beine des Abstützkreuzes des Turmdrehkrans in einer Nullstellung zueinander im gleichen Winkel, bei drei Beinen 120°, bei vier Beinen in einem Winkel von jeweils 90° usw. ausgerichtet, und eines, mehrere oder sämtliche der Beine, vorzugsweise sämtliche Beine, sind derart gelenkig an dem Abstützkreuz angeordnet, dass sie um einen Verstellwinkel aus der Nullstellung heraus auslenkbar sind. Diese Ausgestaltung beruht auf dem Ansatz, dass sich die Türme der zu errichtenden Windenergieanlagen je nach der Turmhöhe an ihrer Basis signifikant unterscheiden. Es ist nicht wirtschaftlich für ein Unternehmen, welches die Errichtung von Windenergieanlagen betreibt, für jede unterschiedliche Turmbauart einen eigens vorgesehenen Turmdrehkran bereitzuhalten, der für die Positionierung relativ zu diesem speziellen Turm konfektioniert wäre. Grundsätzlich ist ein Bestreben, den Turmdrehkran möglichst nah an den Turm der zu errichtenden Windenergieanlage heranstellen zu können, insbesondere vor dem Hintergrund, dass Turmdrehkräne ab bestimmten Bauhöhen mittels mechanischer Abspannungen an dem errichteten Turm der Windenergieanlage selbst befestigt werden. Bereits aus diesem Grund sind die Abstände zwischen Turm und Windenergieanlage möglichst gering zu halten, damit sich last- oder windbedingte Schwingungen möglichst gering negativ auf das derart gekoppelte System zwischen Turm und Turmdrehkran auswirken können.

Ein Turm mit einem konventionellen, starren, Abstützkreuz müsste zwangsläufig bei einem größeren Windenergieanlagenturm mit einem höheren Basisdurchmesser des untersten Turmsegments mit der Mitte des Turmdrehkrans weiter von der Mitte des Windenergieanlagenturms entfernt stehen, weil das Abstützkreuz nicht näher an den Turm heran kann, als es seine baulichen Abmessungen zulassen. Indem die Beine der Abstützung in einer horizontalen Ebene, also seitlich, verschwenkt werden können, ist es möglich, durch ein weiteres Abspreizen relativ zur Nullstellung auch bei Türmen größeren Durchmessers noch nah an den Turm heran zu gelangen. Eine solche technische Ausgestaltung lässt sich auch besonders vorteilhaft mit der Verwendung der erfindungsgemäßen Lastverteilerplatten kombinieren. Zugleich wird es ermöglicht, bei Türmen mit geringerem Basisdurchmesser durch näheres Anlegen der Beine des Abstützkreuzes relativ zur Nullstellung in Richtung des Turms der Windenergieanlage den gleichen Abstand zwischen den Mittenachsen des Turmdrehkrans und des Windenergieanlagenturms einzustellen, wie er bei größeren Windenergieanlagen auch eingehalten würde. Dies ermöglicht die Benutzung beispielsweise identischer Abspannsysteme für alle Turmgrößen. Weiterhin wird durch die Schwenkbarkeit der Beine des Abstützkreuzes ermöglicht, dass die Beine mit dem Punkt ihrer Krafteinleitung, uns vorzugsweise somit auch die Lastverteilerplatten, immer mittig auf dem Fundament in einem Bereich aufgestellt werden können, der zur Kraftaufnahme gut geeignet ist. Dies erhöht die Anlagensicherheit weiterhin.

In einer bevorzugten Weiterbildung dieses Aspekts liegt der Verstellwinkel in einem Bereich von t 10° oder mehr um die Nullstellung herum liegt, und vorzugsweise in 5°-Schritten einstellbar ist.

In einer weiteren Ausführungsform weist der Turm zumindest eine Abspannung, vorzugsweise aber zwei, drei oder mehr als drei Abspannungen, zum Befestigen des Turmdrehkrans an dem Turm der zu errichtenden Windenergieanlage in einer ersten, bzw. zusätzlich in einer zweiten, dritten und weiteren Höhen auf, wobei die Abspannungen jeweils eine oder mehrere hydraulisch betätigte teleskopierbare Haltearme aufweisen. Abspannungen zum Befestigen von Turmdrehkränen an Bauwerken sind grundsätzlich bereits bekannt. Bislang ist es allerdings so, dass die Abspannungen rein mechanisch in ihrer Länge justiert werden. Hierzu weisen die vorbekannten Abspannungen Arbeitsbühnen auf, die in großer Höhe von Bedienpersonal begangen werden müssen. Das Arbeiten in großer Höhe ist mit den bekannten Gefahren verbunden, sodass ein Ansatz gemäß diesem Aspekt der Erfindung war, manuelle Eingriffe möglichst weitgehend zu vermindern. Das pneumatische oder hydraulische Betätigen der Haltearme wird diesbezüglich als deutlicher Sicherheitsbeitrag angesehen, zumal der Arbeitsschritt auch aus der Ferne, beispielsweise vom Boden aus, eingeleitet werden kann.

Die Haltearme werden vorzugsweise automatisch oder ferngesteuert von einer eingefahrenen Position aus in eine ausgefahrene Position bewegt, und sind dazu eingerichtet, in der ausgefahrenen Position mittels einer Kupplung mit dem Turm reversibel lösbar verbunden zu werden. Unter dem reversibel lösbaren Verbinden wird im Sinne der Erfindung ein beliebig oft wiederholbarer Verbinde- und Lösvorgang verstanden, der zerstörungsfrei durchführbar ist.

Die Erfindung löst bei dem eingangs bezeichneten Verfahren zum Errichten eines Turmdrehkrans für die Errichtung einer Windenergieanlage, insbesondere eines Turmdrehkrans nach einer der hierin beschriebenen bevorzugten Ausführungsformen, die ihm zugrunde liegende Aufgabe mit den Schritten: Bereitstellen eines Fundaments der Windenergieanlage, Positionieren von zwei Lastverteilerplatten über dem Fundament, unverbunden mit dem Fundament, Positionieren von einer oder mehreren, vorzugsweise zwei Lastverteilerplatten neben dem Fundament auf einer Bodenfläche, unverbunden mit der Bodenfläche, Verbinden der Lastverteilerplatten mit dem Turm mittels eines drei oder mehr, vorzugsweise vier Beine aufweisenden Abstützkreuzes, und Errichten des Turms, wobei die Lastverteilerplatten den Ballast des Turms bilden.

Hinsichtlich der Vorteile und bevorzugten Ausführungsformen des Verfahrens wird auch auf die obigen Ausführungen zum erfindungsgemäßen Turmdrehkran in all seinen Aspekten verwiesen. Als zentraler Vorteil wird angesehen, dass durch die Verwendung der Lastverteilerplatten, die unverbunden über dem Fundament bzw. auf der Bodenfläche neben dem Fundament positioniert werden, signifikanter Materialeinsatz eingespart werden kann, da das Eingießen und Befestigen von Fundamentankern im Windenergieanlagenfundament ausbleiben kann. Die Lastverteilerplatten sind mit gängigen Fahrzeugen transportabel und können auf einfache Weise am Aufstellort der Windenergieanlage so positioniert werden, dass der Turm optimal relativ zur Windenergieanlage steht. Da die Lastverteilerplatten aus sich heraus bereits den Ballast des Turms bilden und somit etwaigen zusätzlichen Zentralballast überflüssig machen, wird auch die sonst für dessen Installation benötigte Zeit eingespart.

Das erfindungsgemäße Verfahren wird vorzugsweise weitergebildet, indem der Turm mittels einer Nivelliereinrichtung nivelliert wird.

Das Nivellieren umfasst vorzugsweise einen, mehrere oder sämtliche der Schritte: Erfassen des Neigungswinkels des Turms, Erfassen des auf einen oder mehrere Zylinder wirkenden Fluiddrucks, Erfassen des Zylinderhubs eines oder mehrerer Zylinder, Betätigen eines oder mehrerer Zylinder in Abhängigkeit einer oder mehrerer der erfassten Größen zum Ausrichten des Turm in der Senkrechten.

Weiter vorzugsweise umfasst das Nivellieren einen, mehrere oder sämtliche der folgenden Schritte: Erstellen einer Empfehlung, vorzugsweise mittels einer elektronischen Steuereinrichtung, für die Ansteuerung eines oder mehrerer Zylinder in Abhängigkeit von zumindest einer der folgenden Größen auf einem Anzeigegerät: Neigungswinkel des Turms, auf die Zylinder wirkender Fluiddruck, von den Zylindern zurückgelegter Zylinderhub; Erzeugen eines von einem Bediener auslesbaren für die Empfehlung repräsentativen Signals; Anzeigen einer, mehrerer oder sämtlicher der folgenden Größen: Winkellage des Turms, Belastung der Zylinder, Betriebsart der Nivelliereinrichtung, Störmeldungen, Systemdrücke, Position der Zylinder am Abstützkreuz, die zur Ansteuerung empfohlenen Zylinder, die Steuerempfehlung.

In einer weiteren bevorzugten Ausführungsform erfolgt das Positionieren der zwei Lastverteilerplatten über dem Fundament, unverbunden mit dem Fundament derart, dass die Massenschwerpunkte der über dem Fundament positionierten Lastverteilerplatten auf einer gemeinsamen Kreisbahn, vorzugsweise konzentrisch zur Mittenachse des Windenergieanlagenturms, angeordnet werden.

Diese Ausgestaltung macht sich die Erkenntnis zu Nutze, dass es für die Lastaufnahme in dem Windenergieanlagenfundament vorteilhaft ist, jene möglichst gleichmäßig und gut verteilt einzuleiten. Hierzu hat sich herausgestellt, dass es vorteilhaft ist, die Massenschwerpunkte der Lastverteilerplatten auf einer gemeinsamen Kreisbahn anzuordnen.

Das Verfahren gemäß diesem Aspekt wird vorteilhaft weitergebildet, indem die gemeinsame Kreisbahn einen Radius $R_K$ aufweist, welcher sich nach der Gleichung

$$R_K = x \cdot \frac{R_A + R_I}{2}$$

bestimmt, wobei x in einem Bereich von 0,8 bis 1,4 liegt, weiter vorzugsweise von 0,85 bis 1,15, besonders bevorzugt in einem Bereich von 0,9 bis 1,1. Unter Einhaltung dieser Bestimmung ist gewährleistet, dass die Lastverteilerplatten weder zu weit außen, noch zu weit innen auf dem Fundament platziert werden, sodass eine günstige Krafteinleitung über einen möglichst großen Bereich des Fundaments möglich ist, ohne dass die maximal zulässige Flächenpressung überschritten wird. $R_I$ steht hierbei vorzugsweise für den äußeren Radius des Fundamentsporns, durch welchen die Turmspannlitzen hindurchlaufen. $R_A$ steht hierbei vorzugsweise für den äußeren Radius des Fundaments, beispielsweise einer Flachgründung mit Auftrieb (FlmA). Alternativ steht $R_A$ für den äußeren Radius einer Flachgründung ohne Auftrieb (FloA), oder einer Tiefgründung mit Auftrieb (TgmA).

Das Verfahren wird vorzugsweise weitergebildet durch den Schritt: Auslenken der Beine aus einer Nullstellung heraus um einen Verstellwinkel derart, dass die Fußpunkte der Beine auf der gemeinsamen Kreisbahn angeordnet sind, vorzugsweise in einem Bereich von mindestens +/- 10°, besonders bevorzugt in 5°-Schritten.

Auch diesbezüglich wird hinsichtlich der Vorteile der schwenkbaren Ausgestaltung der Beine auf die vorstehenden Ausführungen zum erfindungsgemäßen Turmdrehkran verwiesen.

Die Erfindung wird nachfolgend unter Bezugnahme auf die beigefügten Figuren anhand eines bevorzugten Ausführungsbeispiels näher beschrieben. Hierbei zeigen:

Figur 1       eine schematische Seitenansicht eines Turmdrehkrans beim Errichten einer Windenergieanlage gemäß einem ersten Ausführungsbeispiel,

Figur 2       eine Detailansicht des Turmdrehkrans aus Figur 1 in einer schematischen Darstellung, und

Figur 3a-c       schematische Draufsichten auf den Turmdrehkran gemäß Figuren 1 bis 2 in verschiedenen Betriebspositionen.

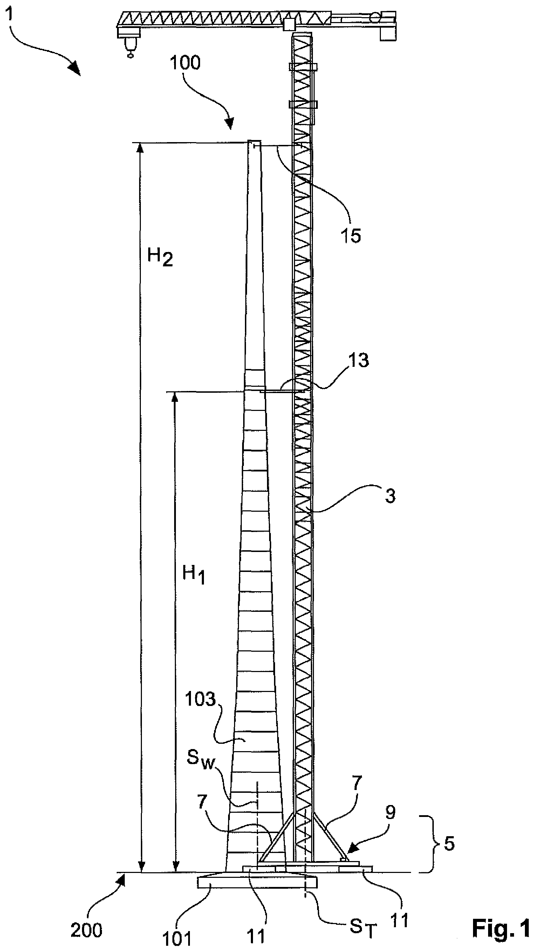

In Figur 1 ist ein Turmdrehkran 1 abgebildet. Der Turmdrehkran ist ein sogenannter Obendreher, mit einem still stehenden Turm 3, der auf einem Turmunterbau 5 aufgebaut und von diesem gestützt wird. Der Turmunterbau 5 weist insgesamt vier zum Abstützen eingerichtete Beine 7 auf. Die Beine 7 des Turms 1 sind an jeweils ihren Fußbereichen 9 mit einer Lastverteilerplatte 11a,b verbunden. Die Lastverteilerplatten 11a,b stehen auf dem Bodenbereich 200, wobei zwei (11b) der vier Lastverteilerplatten neben einem Fundament 101 einer zu errichtenden Windenergieanlage 100 auf dem Boden stehen, mit dem Boden unverbunden, und zwei weitere Lastverteilerplatten 11a über dem Fundament 101, mit dem Fundament 101 unverbunden, angeordnet sind.

Die Windenergieanlage 100 weist eine Vielzahl Turmsegmente 103 auf, die eines nach dem anderen von dem Turmdrehkran 1 angehoben und auf die darunterliegenden Turmsegmente gesetzt werden. Die Windenergieanlage 100 weist eine Mittenachse $S_W$ auf, während der Turm eine Mittenachse $S_T$ aufweist.

In einer Höhe $H_1$ weist der Turmdrehkran 1 eine erste Abspannung 13 auf, mittels derer der Turmdrehkran 1 an dem Turm der Windenergieanlage 100 befestigt ist. Die Tatsache, dass die Turmsegmente 103 in dieser Höhe $H_1$ bereits fest mit dem Fundament 101 verspannt sind, bietet dem Turmdrehkran 1 zusätzliche Stabilität.

Angesichts der Tendenz zu immer höheren Windenergieanlagentürmen ist erfindungsgemäß vorgesehen, dass ab einer bestimmten Höhe $H_2$, beispielsweise oberhalb von 140 m, eine zweite Verspannung 15 zwischen dem Turmdrehkran 1 und dem Turm der Windenergieanlage 100 angebracht wird. Potentiell können bei weiter wachsenden Türmen in weiteren Höhen, die hier der Einfachheit halber nicht dargestellt sind, weitere Verspannungen angebracht werden.

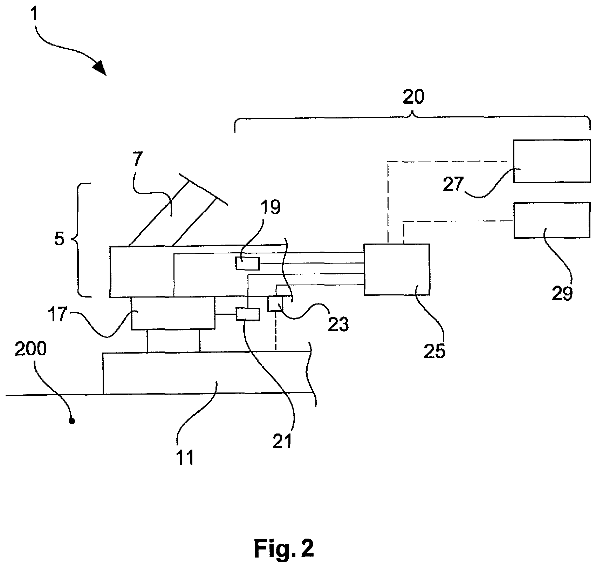

In Figur 2 ist der Auflagebereich einer der Lastverteilerplatten 11 auf dem Bodenbereich 200 schematisch dargestellt. Der Turmunterbau 5 und mit ihm der gesamte Turmdrehkran 1 muss für einen gefahrlosen Betrieb des Turmdrehkrans 1 senkrecht ausgerichtet werden. Hierzu weist der Turmdrehkran 1 eine Nivelliereinrichtung 20 auf. Die Nivelliereinrichtung 20 weist vorzugsweise für jede Lastverteilerplatte 11a,b und jedes Bein 7 des Turmunterbaus 5 einen Zylinder 17 auf, beispielsweise einen Hydraulikzylinder. Der Zylinder 17 ist signalleitend mit einer elektronischen Steuereinrichtung 25, vorzugsweise einer SPS-Steuerung, verbunden und von dieser ansteuerbar. Ferner ist der Zylinder 17 mit einem Druckmessaufnehmer 21 verbunden, welcher seinerseits signalleitend mit der elektronischen Steuereinrichtung 25 verbunden ist. Der Turmunterbau 5 trägt für die Nivelliereinrichtung 20 vorzugsweise ferner einen Neigungssensor 19, der signalleitend mit der elektronischen Steuereinrichtung 25 verbunden ist.

Entweder am Turmunterbau 5, oder alternativ zu der gezeigten Variante direkt am Zylinder 17, ist vorzugsweise ein Absolutwertgeber 23 zum Ermitteln des vom Zylinder zurückgelegten Zylinderhubs vorgesehen. Dies kann beispielsweise ein optischer Messaufnehmer sein. Auch der Absolutwertgeber 23 ist mit der elektronischen Steuereinrichtung 25 signalleitend verbunden.

Die elektronische Steuereinrichtung 25 ist ihrerseits mit einem Anzeigegerät 27 und einem Bedienelement 29 signalleitend verbunden, wahlweise kabelgebunden oder kabellos. Die elektronische Steuereinrichtung 25 ist dazu eingerichtet, in Abhängigkeit der ermittelten Drücke der Zylinder 17, und/oder der ermittelten Neigung, und/oder der zurückgelegten Zylinderhübe eine Verstellempfehlung für die Zylinder 17 zu ermitteln und diese auf das Anzeigegerät 27 zu übermitteln. Der Bediener kann vorzugsweise mittels des Bedienelements 29 einen der Empfehlung folgenden Befehl eingeben, oder manuell einen abweichenden Befehl. Alternativ ist die elektronische Steuereinrichtung 25 vorzugsweise dazu ausgerichtet, den Ausrichtbetrieb autonom durchzuführen, sofern im Rahmen der gesetzlichen Bestimmung erlaubt.

Vorzugsweise weist die elektronische Steuereinrichtung ein Steuermodul auf, welches dazu programmiert ist, die Funktion der autonomen Nivellierung nach Passworteingabe freizugeben oder zu blockieren, je nach rechtlichen Vorschriften am Einsatzort des Turmdrehkrans 1.

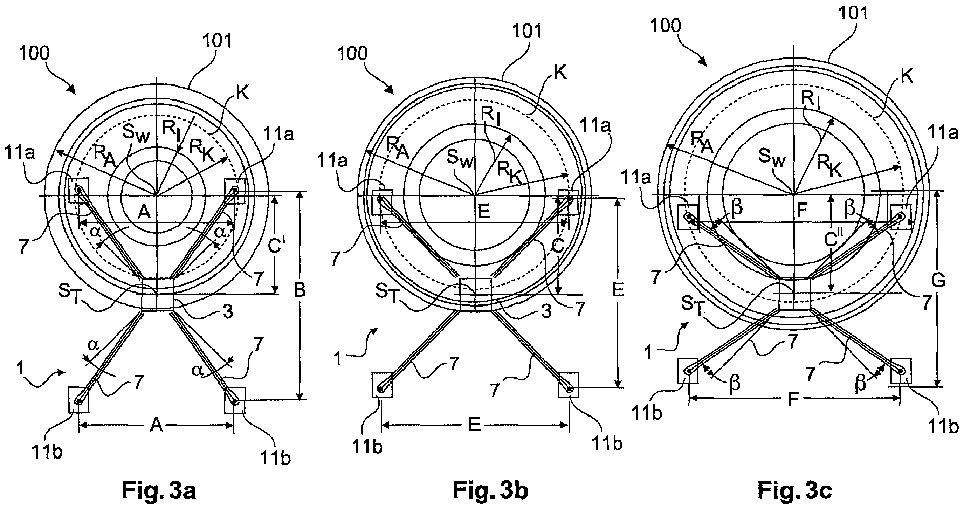

Die Figuren 3a-c verdeutlichen einen weiteren Erfindungsaspekt. In den Figuren 3a-c ist von oben die Positionierung des Turmdrehkrans 1 relativ zur Windenergieanlage 100, insbesondere zu deren Fundament 101 dargestellt.

Das Fundament 101 weist einen äußeren Umfang mit einem Radius $R_A$ auf sowie einen Sporn mit dem Radius $R_I$.

In Figur 3b sind die Beine 7 des Turmdrehkrans 1 in einer Nullstellung angeordnet. In dieser Nullstellung spannen jeweils benachbarte Beine in der dargestellten horizontalen Ebene einen im Wesentlichen rechten Winkel, vorzugsweise genau einen rechten Winkel miteinander auf. Die Lastverteilerplatten 11a und mit ihnen die Beine 7 sind so angeordnet, dass sie über dem Fundament 101 auf einer gemeinsamen Kreisbahn K liegen, vorzugsweise mit ihrem Massenschwerpunkt. Der Radius $R_K$ der Kreisbahn K ist vorzugsweise anhand der obigen Bestimmungen ermittelt worden.

Als Ergebnis dieser Positionierung nimmt der Turmdrehkran 1 einen Abstand C ein, gemessen von seiner Mittenachse $S_T$ zur Mittenachse $S_W$ der Windenergieanlage 100.

Aufgrund der Nullstellung ist der direkte Abstand zwischen den Fußbereichen der Beine 7 jeweils gleich und nimmt den Wert E ein.

Im Vergleich zu der Nullstellung gemäß Figur 3b wird der Turmdrehkran in Figur 3a bei einer Windenergieanlage 100 eingesetzt, deren Fundament 101 - und auch Turm - einen geringeren Durchmesser als in Figur 3b aufweisen. In dem in Figur 3a gezeigten Zustand befinden sich die Beine 7 nicht in Nullstellung, sondern sind um einen Winkel α ausgelenkt. Folge hiervon ist, dass die Fußbereiche der Beine 7 an den Lastverteilerplatten 11a und mit ihnen die Lastverteilerplatten 11a selbst, näher aneinander stehen als in Figur 3b und nun den Abstand A einnehmen, der geringer ist als Abstand E. Die Lastverteilerplatten 11a sind aber ebenfalls auf einer gemeinsamen Kreisbahn K mit dem Radius $R_K$ angeordnet, welche nach den obigen Bestimmungen ermittelt wurde. Hierdurch, und durch das Verschränken der Beine 7 um den Winkel α ist es möglich, den Abstand zwischen dem Turmdrehkran 1 und der Windenergieanlage 100 auch in den Zustand gemäß Figur 3a im Wesentlichen gleich dem Abstand zu halten, der in Figur 3b eingestellt wurde. Die Mittenachse $S_T$ des Turmdrehkrans 1 hat den Abstand C' zur Mittenachse $S_W$ der Windenergieanlage 100 in Figur 3a.

In Figur 3c ist im Vergleich zur Figur 3b und 3a das andere Einstellextrem abgebildet. Die Windenergieanlage 100 gemäß Figur 3c weist einen größeren Fundamentdurchmesser 101 und mit ihm einen größeren Turmdurchmesser an der Basis auf. Hier sind nun die Beine 7 und die Lastverteilerplatten 11a aus der Nullstellung in die entgegengesetzte Richtung bildgemäß Figur 3a ausgelenkt worden, und zwar um Winkel β. Hierdurch ist nun der Abstand zwischen den Fußbereichen der Beine 7 und der Lastverteilerplatten 11a mit dem Wert F größer als der Wert E in Figur 3b, während der Abstand zwischen den Lastverteilerplatten 11a und 11b und den jeweiligen Fußbereichen der Beine 7, die mit diesen Lastverteilerplatten verbunden sind, geringer und nimmt den Wert G ein. Für den Fall, das Winkel β betragsgleich mit Winkel α ist, entspricht Wert G dem Wert A, während der Wert F dem Wert B entspricht.

Auch im Ausführungsbeispiel gemäß Figur 3c sind die Lastverteilerplatten 11a, vorzugsweise mit ihrem Massenschwerpunkt, auf einer gemeinsamen Kreisbahn K mit dem Radius $R_K$ angeordnet, der nach den obigen Bestimmungen ermittelt wurde. So wird es auch bei einem größeren Fundament, wie hier in Figur 3c gezeigt, ermöglicht, im Wesentlichen den gleichen Abstand zwischen dem Drehturmkran 1 und der Windenergieanlage 100 einzustellen. Von der Mittenachse des $S_T$ des Turmdrehkrans 1 zur Mittenachse $S_W$ der Windenergieanlage 100 beträgt der Abstand in diesem Fall den Wert C.

Um einen Anhaltspunkt für die Bandbreite des Einsatzzwecks des erfindungsgemäßen Turmdrehkrans zu erhalten, kann angenommen werden, dass die Bauhöhe des Turms der Windenergieanlage 100 in Figur 3a in etwa 100 m betragen wird, während die Turmhöhe der Windenergieanlage 100 in Figur 3b etwa 125 m betragen wird, und die Turmhöhe der Windenergieanlage 100 in Figur 3c etwa 150 m betragen wird. Die Abstände C, C' und C" betragen jeweils etwa 9,5 m. Die Radien $R_A$ liegen bei den drei Ausführungsbeispielen zwischen ca. 10,70 m (Figur 3a) und 13 m (Figur 3c). Die Werte für $R_I$ liegen zwischen ca. 4,70 m [Figur 3a] und ca. 8,50 m (Figur 3c). Die Werte für die Abstände A bis F schwanken zwischen ca. 15 m (A, G) und ca. 20,5 m (B, F).

Die Lastverteilerplatten 11 weisen beispielhaft ein Gewicht von ca. 20 t pro Stück auf.

Optional könnten die Lastverteilerplatten beispielsweise auch ein Stückgewicht im Bereich von ca. 10 t bis ca. 40 t, beispielsweise ca. 24,5 t aufweisen, um für Turmdrehkrane der gezeigten Größenordnung bei minderstarken oder bei stärkeren Querlasten etc. auch noch ausreichende Ballastierung zu bieten.

**Patentansprüche**

1. Turmdrehkran (1) zum Errichten einer Windenergieanlage, mit

    - einem Turm (3), und
    - einem mit dem Turm (3) verbundenen Turmunterbau (5) zum Stützen des Turms, wobei
    - der Turmunterbau (5) ein Abstützkreuz aufweist, welches drei oder mehr, vorzugsweise vier, sich vom Turm (3) fort erstreckende Beine (7) aufweist,

    **dadurch gekennzeichnet, dass** an jedem Bein bodenseitig eine mit dem Fundament (101) unverbundene Lastverteilerplatte (11a,b) befestigt ist, wobei die Lastverteilerplatten (11a,b) gemeinsam den Ballast des Turms bilden.

2. Turmdrehkran (1) nach Anspruch 1, wobei der Turmunterbau (5) eine Nivelliereinrichtung (20) aufweist, wobei die Nivelliereinrichtung (20) vier separat ansteuerbare Zylinder (17) aufweist.

3. Turmdrehkran (1) nach Anspruch 2, wobei die Nivelliereinrichtung (20)

    - Kraftmess-Sensoren zur Erfassung der auf die Zylinder wirkenden Kraft, und/oder
    - Drucksensoren zum Erfassen des auf die Zylinder (17) wirkenden Fluiddrucks, und/oder
    - einen Neigungssensor (19), und/oder
    - einen oder mehrere, vorzugsweise für jeden Zylinder (17) mindestens einen, Sensoren zur Erfassung des Zylinderhubs aufweist.

4. Turmdrehkran (1) nach Anspruch 2 oder 3, wobei die Nivelliereinrichtung (20) eine elektronische Steuereinrichtung (25), vorzugsweise eine SPS-Steuerung, zum Ansteuern der Zylinder (17) aufweist.

5. Turmdrehkran (1) nach Anspruch 4,

    wobei die elektronische Steuereinrichtung (25) dazu eingerichtet ist, in Abhängigkeit von zumindest einer der folgenden Größen:

        - Neigungswinkel des Turms,
        - auf die Zylinder wirkende Kraft,
        - auf die Zylinder (17) wirkender Fluiddruck,
        - von den Zylindern (17) zurückgelegter Zylinderhub,

    einen, mehrere oder sämtliche Zylinder (17) so anzusteuern, dass der Turm (3) senkrecht ausgerichtet wird.

6. Turmdrehkran (1) nach Anspruch 4 oder 5,

    wobei die elektronische Steuereinrichtung (25) dazu eingerichtet ist, in Abhängigkeit von zumindest einer der folgenden Größen:

        - Neigungswinkel des Turms,
        - auf die Zylinder wirkende Kraft,
        - auf die Zylinder (17) wirkender Fluiddruck,
        - von den Zylindern (17) zurückgelegter Zylinderhub,

    eine Empfehlung für die Ansteuerung eines oder mehrerer Zylinder (17) zu ermitteln, und ein von einem Bediener auslesbares für die Empfehlung repräsentatives Signal zu erzeugen.

7. Turmdrehkran (1) nach einem der Ansprüche 2 bis 6, wobei die Nivelliereinrichtung (20) ein Anzeigegerät (27) aufweist, welches dazu eingerichtet ist, eine, mehrere oder sämtliche der folgenden Größen anzuzeigen:

        - Winkellage des Turms,
        - Belastung der Zylinder (17),
        - Betriebsart der Nivelliereinrichtung (20),
        - Störmeldungen,
        - Systemdrücke,
        - Position der Zylinder (17) am Abstützkreuz,
        - die zur Ansteuerung empfohlenen Zylinder (17),
        - die Steuerempfehlung.

8. Turmdrehkran (1) nach einem der vorstehenden Ansprüche, wobei benachbarte Beine (7) des Abstützkreuzes in einer Nullstellung zueinander in einem Winkel von jeweils 90° ausgerichtet sind, und eines, mehrere oder sämtliche der Beine (7), vorzugsweise sämtliche Beine (7), derart gelenkig an dem Abstützkreuz angeordnet sind, dass sie um einen Verstellwinkel aus der Nullstellung heraus auslenkbar sind.

9. Turmdrehkran (1) nach Anspruch 8, wobei der Verstellwinkel in einem Bereich von +/-10° oder mehr um die Nullstellung herum liegt, und vorzugsweise in 5°-Schritten einstellbar ist.

10. Turmdrehkran (1) nach einem der vorstehenden Ansprüche, mit zumindest einer Abspannung, vorzugsweise zwei, drei oder mehr als drei Abspannungen (13, 15) zum Befestigen des Turmdrehkrans (1) an dem Turm (3) der zu errichtenden Windenergieanlage (100) in einer ersten Höhe $H_1$, bzw. zusätzlich in einer zweiten, dritten Höhe und in weiteren Höhen, wobei die Abspannung jeweils eine oder mehrere pneumatisch oder hydraulisch betätigte teleskopierbare Haltearme aufweist, die, vorzugsweise automatisch oder ferngesteuert, von einer eingefahrenen Position aus in eine ausgefahrene Position bewegbar und dazu eingerichtet sind, in der ausgefahrenen Position mittels einer Kupplung mit dem Turm (3) reversibel lösbar verbunden zu werden.

11. Verfahren zum Errichten eines Turmdrehkrans (1) für die Errichtung einer Windenergieanlage (100), insbesondere eines Turmdrehkrans (1) nach einem der vorstehenden Ansprüche, umfassend die Schritte:

   - Bereitstellen eines Fundaments (101) der Windenergieanlage (100),
   - Positionieren von zwei Lastverteilerplatten (11a) über dem Fundament (101), unverbunden mit dem Fundament (101),
   - Positionieren von einem oder mehreren, vorzugsweise zwei Lastverteilerplatten (11b) neben dem Fundament (101) auf einer Bodenfläche, unverbunden mit der Bodenfläche,
   - Verbinden der Lastverteilerplatten (11a,b) mit dem Turm (3) mittels eines drei oder mehr, vorzugsweise vier Beine (7) aufweisenden Abstützkreuzes, und
   - Errichten des Turms, wobei die Lastverteilerplatten (11a,b) den Ballast des Turms bilden.

12. Verfahren nach Anspruch 11, umfassend den Schritt:

   - Nivellieren des Turms mittels einer Nivelliereinrichtung (20).

13. Verfahren nach Anspruch 12, wobei das Nivellieren einen, mehrere oder sämtliche der Schritte umfasst:

   - Erfassen des Neigungswinkels des Turms,
   - Erfassen der auf die Zylinder wirkenden Kraft,
   - Erfassen des auf einen oder mehrere Zylinder (17) wirkenden Fluiddrucks,
   - Erfassen des Zylinderhubs eines oder mehrerer Zylinder (17),
   - Betätigen eines oder mehrerer Zylinder (17) in Abhängigkeit einer oder mehrerer der erfassten Größen zum Ausrichten des Turms (3) in der Senkrechten.

14. Verfahren nach Anspruch 12 oder 13, wobei das Nivellieren einen, mehrere oder sämtliche der Schritte umfasst:

   - Erstellen einer Empfehlung, vorzugsweise mittels einer elektronischen Steuereinrichtung (25), für die Ansteuerung eines oder mehrerer Zylinder (17) in Abhängigkeit von zumindest einer der folgenden Größen auf einem Anzeigegerät (27):
   - Neigungswinkel des Turms,
   - auf die Zylinder wirkende Kraft,
   - auf die Zylinder (17) wirkender Fluiddruck,
   - von den Zylindern (17) zurückgelegter Zylinderhub;
   - Erzeugen eines von einem Bediener auslesbaren für die Empfehlung repräsentativen Signals;
   - Anzeigen einer, mehrerer oder sämtlicher der folgenden Größen:
   - Winkellage des Turms,
   - Belastung der Zylinder (17),
   - Betriebsart der Nivelliereinrichtung (20),
   - Störmeldungen,
   - Systemdrücke,
   - Position der Zylinder (17) am Abstützkreuz,
   - die zur Ansteuerung empfohlenen Zylinder (17),
   - die Steuerempfehlung.

15. Verfahren nach einem der Ansprüche 11 bis 14, umfassend den Schritt:

   - Positionieren der zwei Lastverteilerplatten (11a) über dem Fundament (101), derart, dass

   die Massenschwerpunkte der über dem Fundament (101) positionierten Lastverteilerplatten (11a,b) auf einer gemeinsamen Kreisbahn (K), vorzugsweise konzentrisch zur Mittenachse des Windenergieanlagenturms, angeordnet werden.

16. Verfahren nach Anspruch 15,

   wobei die gemeinsame Kreisbahn (K) einen Radius $R_K$ aufweist, welcher sich nach der Glei-

   $$R_K = x \cdot \frac{R_A + R_I}{2}$$

   chung bestimmt, wobei x in einem Bereich von 0,8 bis 1,4 liegt, vorzugsweise von 0,85 bis 1,15, besonders bevorzugt von 0,9 bis 1,1.

17. Verfahren nach Anspruch 15 oder 16, umfassend den Schritt:

   - Auslenken der Beine (7) aus einer Nullstellung heraus um einen Verstellwinkel derart, dass die Fußpunkte der Beine (7) auf der gemeinsamen Kreisbahn (K) angeordnet sind, vorzugsweise in einem Bereich von +/- 10°, besonders bevorzugt in 5°-Schritten.

**Claims**

1. Rotating tower crane (1) for erecting a wind turbine, having

   - a tower (3) and
   - a tower substructure (5), which is connected to the tower (3) and is intended for supporting the tower, wherein
   - the tower substructure (5) has a supporting cross frame, which has three or more, preferably four, legs (7) extending from the tower (3),

   **characterized in that** each leg has fastened on it, on the ground side, a load-distributor plate (11a, b), which is not connected to the foundation (101), wherein the load-distributor plates (11a, b) together form the ballast of the tower.

2. Rotating tower crane (1) according to Claim 1, wherein the tower substructure (5) has a levelling device (20), and wherein the levelling device (20) has four separately activatable cylinders (17).

3. Rotating tower crane (1) according to Claim 2, wherein the levelling device (20) has

   - force-measuring sensors for sensing the force acting on the cylinders, and/or
   - pressure sensors for sensing the fluid pressure acting on the cylinders (17), and/or
   - an inclination sensor (19), and/or
   - one or more sensors, preferably at least one sensor for each cylinder (17), for sensing the cylinder stroke.

4. Rotating tower crane (1) according to Claim 2 or 3, wherein the levelling device (20) has an electronic control device (25), preferably a programmable controller, for activating the cylinders (17).

5. Rotating tower crane (1) according to Claim 4,

   wherein the electronic control device (25) is intended, in dependence on at least one of the following variables:

   - angle of inclination of the tower,
   - force acting on the cylinders,
   - fluid pressure acting on the cylinders (17),
   - cylinder stroke covered by the cylinders (17),

   to activate one or more, or all, of the cylinders (17) such that the tower (3) is oriented vertically.

6. Rotating tower crane (1) according to Claim 4 or 5,

   wherein the electronic control device (25) is intended, in dependence on at least one of the following variables:

   - angle of inclination of the tower,
   - force acting on the cylinders,
   - fluid pressure acting on the cylinders (17),
   - cylinder stroke covered by the cylinders (17),

   to establish a recommendation for the activation of one or more cylinders (17) and to generate a signal which can be read by an operator and is representative of the recommendation.

7. Rotating tower crane (1) according to one of the claims 2 to 6, wherein the levelling device (20) has a display unit (27), which is intended to display one or more, or all, of the following variables:

   - angular position of the tower,
   - loading on the cylinders (17),
   - operating mode of the levelling device (20),
   - fault messages,
   - system pressures,
   - position of the cylinders (17) on the supporting cross frame,
   - the cylinders (17) recommended for activation,
   - the control recommendation.

8. Rotating tower crane (1) according to one of the preceding claims, wherein adjacent legs (7) of the supporting cross frame, in a zero position, are oriented in relation to one another at an angle of in each case 90°, and one or more, or all, of the legs (7), preferably all of the legs (7), are arranged in an articulated manner on the supporting cross frame such that they can be deflected out of the zero position by an adjustment angle.

9. Rotating tower crane (1) according to Claim 8, wherein the adjustment angle ranges from +/- 10° or more around the zero position, and can be set preferably in steps of 5°.

10. Rotating tower crane (1) according to one of the preceding claims, having at least one stay cable, preferably two, three or more than three stay cables (13, 15), for fastening the rotating tower crane (1) at a first height $H_1$, or, in addition, at a second and third height and at further heights, on the tower (3) of the wind turbine (100) which is to be erected, wherein the stay cable has in each case one or more pneumatically or hydraulically actuated telescopic retaining arms which can be moved, preferably automatically or by remote control, from a retracted position into an extended position and are intended, in the extended position, to be connected to the tower (3) in a reversibly releasable manner by means of a coupling.

11. Method of erecting a rotating tower crane (1) for erecting a wind turbine (100), in particular method of erecting a rotating tower crane (1) according to one of the preceding claims, comprising the following steps:

- supplying a foundation (101) for the wind turbine (100),
- positioning two load-distributor plates (11a) above the foundation (101), with no connection to the foundation (101),
- positioning one or more, preferably two, load-distributor plates (11b) alongside the foundation (101) on a ground surface, with no connection to the ground surface,
- connecting the load-distributor plates (11a, b) to the tower (3) by means of a supporting cross frame having three or more, preferably four, legs (7), and
- erecting the tower, wherein the load-distributor plates (11a, b) form the ballast of the tower.

12. Method, according to Claim 11, comprising the following step:

- levelling the tower by means of a levelling device (20).

13. Method according to Claim 12, wherein the levelling operation comprises one or more, or all, of the following steps:

- sensing the angle of inclination of the tower,
- sensing the force acting on the cylinders,
- sensing the fluid pressure acting on one or more cylinders (17),
- sensing the cylinder stroke of one or more cylinders (17),
- actuating one or more cylinders (17) in dependence on one or more of the variables sensed, in order to orient the tower (3) vertically.

14. Method according to Claim 12 or 13, wherein the levelling operation comprises one or more, or all, of the following steps:

- establishing a recommendation, preferably by means of an electronic control device (25), for the activation of one or more cylinders (17) in dependence on at least one of the following variables on a display unit (27):
- angle of inclination of the tower,

- force acting on the cylinders,
- fluid pressure acting on the cylinders (17),
- cylinder stroke covered by the cylinders (17);
- generating a signal which can be read by an operator and is representative of the recommendation;
- displaying one or more, or all, of the following variables:
- angular position of the tower,
- loading on the cylinders (17),
- operating mode of the levelling device (20),
- fault messages,
- system pressures,
- position of the cylinders (17) on the supporting cross frame,
- the cylinders (17) recommended for activation,
- the control recommendation.

15. Method according to one of Claims 11 to 14, comprising the following step:

- positioning the two load-distributor plates (11a) above the foundation (101), such that

the centres of mass of the load-distributor plates (11a, b) positioned above the foundation (101) are arranged on a common circular path (K), preferably concentrically with the centre axis of the wind-turbine tower.

16. Method according to Claim 15,

wherein the common circular path (K) has a radius $R_K$, which is defined by the equation

$$R_K = x \cdot \frac{R_A + R_I}{2},$$

where x ranges from 0.8 to 1.4, preferably from 0.85 to 1.15, particularly preferably from 0.9 to 1.1.

17. Method according to Claim 15 or 16, comprising the following step:

- deflecting the legs (7) out of a zero position by an adjustment angle such that the bottom points of the legs (7) are arranged on the common circular path (K), preferably in a range from +/- 10°, particularly preferably in steps of 5°.

**Revendications**

1. Grue à tour (1) destinée à construire une éolienne, avec

- une tour (3), et

- une sous-structure de tour (5) reliée à la tour (3), destinée à soutenir la tour, dans laquelle
- la sous-structure de tour (5) présente une croix d'appui, laquelle présente trois pieds (7) ou plus, de préférence quatre, s'étendant depuis la tour (3),

**caractérisée en ce qu'**une plaque de répartition de charge (11a, b) non reliée à la base (101) est fixée côté sol sur chaque pied, dans laquelle les plaques de répartition de charge (11a, b) forment conjointement le lest de la tour.

2. Grue à tour (1) selon la revendication 1, dans laquelle la sous-structure de tour (5) présente un dispositif de mise à niveau (20), dans laquelle le dispositif de mise à niveau (20) présente quatre vérins (17) pouvant être pilotés séparément.

3. Grue à tour (1) selon la revendication 2, dans laquelle le dispositif de mise à niveau (20) présente

     - des capteurs de mesure de force destinés à détecter la force agissant sur les vérins, et/ou
     - des capteurs de pression destinés à détecter la pression de fluide agissant sur les vérins (17), et/ou
     - un capteur d'inclinaison (19), et/ou
     - un ou plusieurs, de préférence pour chaque vérin (17) au moins un, capteur destiné/capteurs destinés à détecter la course de vérin.

4. Grue à tour (1) selon la revendication 2 ou 3, dans laquelle le dispositif de mise à niveau (20) présente un dispositif de commande électronique (25), de préférence une commande SPS, destinée à piloter les vérins (17).

5. Grue à tour (1) selon la revendication 4,

     dans laquelle le dispositif de commande électronique (25) est mis au point pour piloter, en fonction d'au moins une des grandeurs suivantes :

         - angle d'inclinaison de la tour,
         - force agissant sur les vérins,
         - pression de fluide agissant sur les vérins (17),
         - course de vérin parcourue par les vérins (17),

     un, plusieurs ou la totalité des vérins (17) de telle sorte que la tour (3) est orientée de manière verticale.

6. Grue à tour (1) selon la revendication 4 ou 5,

     dans laquelle le dispositif de commande électronique (25) est mis au point pour déterminer, en fonction d'au moins une des grandeurs suivantes :

         - angle d'inclinaison de la tour,
         - force agissant sur les vérins,
         - pression de fluide agissant sur les vérins (17),
         - course de vérin parcourue par les vérins (17),

     une recommandation pour le pilotage d'un ou de plusieurs vérins (17), et pour générer un signal représentant la recommandation, lisible par un utilisateur.

7. Grue à tour (1) selon l'une quelconque des revendications 2 à 6, dans laquelle le dispositif de mise à niveau (20) présente un appareil d'affichage (27), lequel est mis au point pour afficher une, plusieurs ou toutes les grandeurs suivantes :

         - position angulaire de la tour,
         - contrainte des vérins (17),
         - mode de fonctionnement du dispositif de mise à niveau (20),
         - messages d'anomalie,
         - pressions de système,
         - position des vérins (17) sur la croix d'appui,
         - les vérins (17) recommandés pour le pilotage,
         - la recommandation de commande.

8. Grue à tour (1) selon l'une quelconque des revendications précédentes,

     dans laquelle des pieds (7) adjacents de la croix d'appui sont orientés dans une position initiale les uns par rapport aux autres selon un angle de respectivement 90° et un, plusieurs ou tous les pieds (7), de préférence tous les pieds (7), sont disposés de manière articulée sur la croix d'appui de telle manière qu'ils peuvent être déviés, hors d
     e la position initiale, selon un angle d'ajustement.

9. Grue à tour (1) selon la revendication 8, dans laquelle l'angle d'ajustement se situe dans une plage de +/- 10° ou plus tout autour de la position initiale, et peut être réglé de préférence par incréments de 5°.

10. Grue à tour (1) selon l'une quelconque des revendications précédentes,

avec au moins un haubanage, de préférence deux, trois ou plus que trois haubanages (13, 15) destinés à fixer la grue à tour (1) sur la tour (3) de l'éolienne (100) à construire à une première hauteur H$_1$, ou en supplément à une deuxième, troisième hauteur et à d'autres hauteurs, dans laquelle le haubanage présente respectivement un ou plusieurs bras de maintien télescopiques pouvant être actionnés de manière pneumatique ou hydraulique, qui peuvent être déplacés de préférence de manière automatique ou de manière commandée à distance, depuis une position rentrée dans une position déployée et sont mis au point pour être reliés de manière amovible et réversible à la tour (3) au moyen d'un couplage dans la position déployée.

11. Procédé de construction d'une grue à tour (1) pour la construction d'une éolienne (100), en particulier d'une grue à tour (1) selon l'une quelconque des revendications précédentes, comprenant les étapes :

    - de fourniture d'une base (101) de l'éolienne (100),
    - de positionnement de deux plaques de répartition de charge (11a) au-dessus de la base (101), qui ne sont pas reliées à la base (101),
    - de positionnement d'une ou de plusieurs, de préférence de deux plaques de répartition de charge (11b) à côté de la base (101) sur une surface au sol, lesquelles ne sont pas reliées à la surface au sol,
    - de liaison des plaques de répartition de charge (11a, b) à la tour (3) au moyen d'une croix d'appui présentant trois ou plus, de préférence quatre pieds (7), et
    - de construction de la tour, dans lequel les plaques de répartition de charge (11a, b) forment le lest de la tour.

12. Procédé selon la revendication 11, comprenant l'étape :

    - de mise à niveau de la tour au moyen d'un dispositif de mise à niveau (20).

13. Procédé selon la revendication 12, dans lequel le mise à niveau comprend une, plusieurs ou toutes les étapes :

    - de détection de l'angle d'inclinaison de la tour,
    - de détection de la force agissant sur les vérins,
    - de détection de la pression de fluide agissant sur un ou plusieurs vérins (17),
    - de détection de la course de vérin d'un ou de plusieurs vérins (17),
    - d'actionnement d'un ou de plusieurs vérins (17) en fonction d'une ou de plusieurs des grandeurs détectées pour orienter la tour (3) de manière verticale.

14. Procédé selon la revendication 12 ou 13, dans lequel le mise à niveau comprend une, plusieurs ou toutes les étapes :

    - de création d'une recommandation, de préférence au moyen d'un dispositif de commande électronique (25), pour le pilotage d'un ou de plusieurs vérins (17) en fonction d'au moins une des grandeurs suivantes sur un appareil d'affichage (27) ;

        - - angle d'inclinaison de la tour,
        - - force agissant sur les vérins,
        - - pression de fluide agissant sur les vérins (17),
        - - course de vérin parcourue par les vérins (17),
        - - de génération d'un signal représentant la recommandation lisible par un utilisateur ;
        - - d'affichage d'une, de plusieurs ou de toutes les grandeurs suivantes :

            - - position angulaire de la tour,
            - - contrainte des vérins (17),
            - - mode de fonctionnement du dispositif de mise à niveau (20),
            - - messages d'anomalie,
            - - pressions de système,
            - - position des vérins (17) sur la croix d'appui,
            - - les vérins (17) recommandés pour le pilotage,
            - - la recommandation de commande.

15. Procédé selon l'une quelconque des revendications 11 à 14, comprenant l'étape :

    - de positionnement des deux plaques de répartition de charge (11a) au-dessus de la base (101), de telle manière que

les centres de masse des plaques de répartition de charge (11a, b) positionnées au-dessus de la base (101) sont disposés sur une trajectoire circulaire (K) commune, de préférence de manière concentrique par rapport à l'axe central de la tour d'éolienne.

16. Procédé selon la revendication 15,

dans lequel la trajectoire circulaire (K) commune présente un rayon Rk, lequel se définit selon l'équation

$$R_K = x \cdot \frac{R_A + R_I}{2} \ ,$$

dans lequel x se situe dans une plage de 0,8 à 1,4, de préférence de 0,85 à 1,15, de manière particulièrement préférée de 0,9 à 1,1.

17. Procédé selon la revendication 15 ou 16, comprenant l'étape :

- de déviation des pieds (7) hors d'une position initiale selon un angle d'ajustement de telle manière que les points inférieurs des pieds (7) sont disposés sur la trajectoire circulaire (K) commune, de préférence dans une plage de +/- 10°, de manière particulièrement préférée par incréments de 5°.

**Fig. 1**

14

**Fig. 2**

Fig.3a

Fig.3b

Fig.3c

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- CN 202671068 U